# EUROPÄISCHE PATENTANMELDUNG

(11) **EP 2 939 908 A1**
(43) Veröffentlichungstag der Anmeldung: **04.11.2015**
(21) Anmeldenummer: 15001257.3
(22) Anmeldetag: 28.04.2015
(51) Int. Cl.: B62D 53/00

(54) **TRANSPORTWAGEN ZUM TRANSPORT VON LADEGUT IM ZUGBETRIEB**

(30) Priorität: 30.04.2014 DE 102014006342
(71) Anmelder: GM Global Technology Operations LLC, Detroit, MI 48265-3000 (US)
(72) Erfinder: Stapf, Matthias, 65428 Rüsselsheim (DE)
(74) Vertreter: Strauss, Peter

(57) **Zusammenfassung**

Transportwagen 1; 19 zum Transport von Ladegut 17 im Zugbetrieb, mit einem Basisfahrgestell 4 und mit mindestens einem weiteren Fahrgestell 4; 16; 18, wobei das Basisfahrgestell 4 und das mindestens eine weitere Fahrgestell 4; 16; 18 miteinander in einem gekoppelten Zustand K koppelbar sind, wobei das Basisfahrgestell 4 mindestens zwei lenkstarre Rollen 7a; 7b zum Verfahren des Basisfahrgestell 4 auf einem Untergrund 8 angeordnet sind, wobei die mindestens zwei lenkstarren Rollen 7a; 7b im gekoppelten Zustand K mit einem auf den Untergrund 8 wirkenden ursprünglichen Anpressdruck beaufschlagt sind, wobei der Transportwagen 1; 19 einen Druck- und/oder Huberzeuger 20 umfasst, wobei der Druck- und/oder Huberzeuger 20 im gekoppelten Zustand K auf das mindestens eine weitere Fahrgestell 5; 16; 18 wirkt, sodass die mindestens zwei lenkstarren Rollen 7a; 7b mit einem erhöhten auf den Untergrund 8 wirkenden Anpressdruck beaufschlagt sind.

## Beschreibung

### Technisches Gebiet:

Die Erfindung betrifft einen Transportwagen zum Transport von Ladegut im Zugbetrieb mit den Merkmalen des Anspruchs 1.

### Hintergrund:

Zur Beförderung von Waren und/oder Materialien innerhalb eines Waren- und Materiallagers werden häufig Transportwagen eingesetzt. Oftmals werden hierfür sogenannte Dollies verwendet, die per Hand verfahren oder durch einen Zugwagen gezogen werden.

Beispielsweise beschreibt die Druckschrift DE 10 2009 914 864 A1, die wohl den nächstliegenden Stand der Technik bildet, einen Transportwagen mit einer Deichsel und einer Anhängerkupplung, der für einen Zugbetrieb vorgesehen ist. Der Transportwagen umfasst ein Fahrgestell, welches mindestens drei Lenkrollen und mindestens eine nicht lenkbewegliche Laufrolle aufweist, wobei die nicht lenkbewegliche Laufrolle mittels eines am Fahrgestell gelagerten Hebels und Absenkmechanismus aus einer Kontaktposition des Bodens in eine angehobene Position vom Boden anhebbar und umgekehrt absenkbar ist.

### Beschreibung:

Der Erfindung liegt die Aufgabe zugrunde, einen funktional verbesserten und spurtreu verfahrbaren Transportwagen bereitzustellen. Diese Aufgabe wird durch einen Transportwagen mit den Merkmalen des Anspruchs 1 gelöst. Bevorzugte oder vorteilhafte Ausführungsformen der Erfindung ergeben sich aus den Unteransprüchen, der nachfolgenden Beschreibung und/oder den beigefügten Figuren.

Es wird ein Transportwagen zum Transport von Ladegut im Zugbetrieb vorgeschlagen. Vorzugsweise ist der Transportwagen dazu ausgebildet, mit mindestens einem Kleinladungsträger, in dem Ladegut mit einem Eigengewicht von vorzugsweise maximal 1200 kg, insbesondere von maximal 1000 kg anordbar oder angeordnet ist, beladen zu werden. Insbesondere ist der Transportwagen dazu ausgebildet, von einer Zugmaschine gezogen zu werden. Hierzu weist der Transportwagen vorzugsweise eine Deichsel und eine Anhängerkupplung auf.

Der Transportwagen umfasst ein Basisfahrgestell und mindestens ein weiteres Fahrgestell. Besonderes bevorzugt umfasst der Transportwagen ein Basisfahrgestell und ein einziges weiteres Fahrgestell oder ein Basisfahrgestell und genau zwei weitere Fahrgestelle. In einer bevorzugten konstruktiven Umsetzung der Erfindung umfasst das Basisfahrgestell einen Außenrahmen mit mindestens einer Traverse. Beispielsweise ist der Außenrahmen rechteckig ausgebildet, wobei sich die mindestens eine Traverse zwischen zwei Längsseiten des Außenrahmens erstreckt und diese miteinander verbindet. Insbesondere unterteilt die mindestens eine Traverse den Außenrahmen in zwei oder mehr Rechtecke.

Das Basisfahrgestell und das mindestens eine weitere Fahrgestell sind miteinander in einen gekoppelten Zustand koppelbar. Bevorzugt ist eine Grundfläche des Basisfahrgestells und des mindestens einen weiteren Fahrgestells in einem gekoppelten Zustand überlappend angeordnet. Besonders bevorzugt ist, dass das mindestens eine weitere Fahrgestell zur Kopplung mit dem Basisfahrgestell in dieses eingeschoben oder eingefahren wird. Im gekoppelten Zustand ist das mindestens eine weitere Fahrgestell zumindest abschnittsweise über, auf oder überlappend mit der mindestens einen Traverse angeordnet. Möglich im Rahmen der Erfindung ist auch, dass das mindestens eine weitere Fahrgestell die mindestens einen Traverse kontaktiert oder sich auf dieser abstützt bzw. auf dieser aufliegt.

Vorzugsweise sind das Basisfahrgestell und das mindestens eine weitere Fahrgestell im gekoppelten Zustand bewegungssynchron miteinander verfahrbar. Optional sind das Basisfahrgestell und das mindestens eine weitere Fahrgestell starr und/oder fest miteinander gekoppelt und/oder können eine Relativposition zueinander beim Verfahren des Transportwagens nicht ändern. Insbesondere bilden das Basisfahrgestell und das mindestens eine weitere Fahrgestell im gekoppelten Zustand den Transportwagen. Im Speziellen bilden das Basisfahrgestell und das mindestens eine weitere Fahrgestell ein gemeinsames Fahrgestell des Transportwagens.

Besonders bevorzugt sind das Basisfahrgestell und das mindestens eine weitere Fahrgestell werkzeugfrei voneinander entkoppelbar. Vorzugsweise sind das Basisfahrgestell und das mindestens eine weitere Fahrgestell unabhängig voneinander auf dem Untergrund verfahrbar. Somit kann der Transportwaren in mindestens zwei Fahrgestelle getrennt werden und nach Bedarf wieder gekoppelt werden.

Durch die Möglichkeit der Koppelung und Entkoppelung des Basisfahrgestells und des mindestens einen weiteren Fahrgestells können diese gemeinsam als der Transportwagen zum Beispiel auf längeren Wegen verfahren werden. Insbesondere zum Verfahren auf kürzeren Wegen kann das mindestens eine weitere Fahrgestell mit dem darauf in dem mindestens einen Kleinladungsträger befindlichen Ladegut vom Basisfahrgestell entkoppelt und separat zum Zielort verfahren werden. Somit muss der mit dem Ladegut beladene Kleinladungsträger nicht vom Transportwagen angehoben und zum Zielort getragen werden. Weiterhin wird es ermöglicht, Kleinladungsträger, die auf dem Transportwagen transportierbar sind, an einem Zielort, zum Beispiel an einer Produktionslinie, anzustellen, ohne einen An- oder Abkoppelvorgang an oder von der Zugmaschine vornehmen zu müssen. Somit kann in vorteilhafter Weise Transport- und/oder Umladezeit eingespart werden.

Das Basisfahrgestell umfasst mindestens zwei lenkstarre Rollen zum Verfahren des Basisfahrgestells auf einem Untergrund. Bevorzugt sind die zwei lenkstarren Rollen an der mindestens einen Traverse angeordnet. Hierbei kontaktieren die mindestens zwei lenkstarren Rollen den Untergrund, auf dem das Basisfahrgestell und/oder der Transportwagen steht. Im Speziellen stehen die mindestens zwei lenkstarren Rollen im gekoppelten Zustand und im entkoppelten Zustand auf dem Untergrund auf. Optional ist die Deichsel des Transportwagens an dem Basisfahrgestell angeordnet oder anordbar. Vorzugsweise umfasst die Deichsel mindestens eine lenkbare Rolle.

Weiterhin ist bevorzugt, dass das mindestens eine weitere Fahrgestell mindestens drei Lenkrollen zum lenkbaren Verfahren des mindestens einen weiteren Fahrgestells und/oder des Transportwagens auf dem Untergrund umfasst. Besonders bevorzugt ist, dass das mindestens eine weitere Fahrgestell ausschließlich Lenkrollen aufweist. Somit kann der Transportwagen lenkbar verfahren werden, wenn das Basisfahrgestell mit den mindestens zwei lenkstarren Rollen und das mindestens eine weitere Fahrgestell mit den mindestens drei Lenkrollen miteinander gekoppelt sind.

In einer bevorzugten Realisierung der Erfindung weist das mindestens eine weitere Fahrgestell mindestens eine Aufnahmeeinrichtung zur Aufnahme mindestens eines Kleinladungsträgers auf. In den mindestens einen Kleinladungsträger ist das Ladegut anordbar oder angeordnet, das zu einem Zielort transportiert wird. Insbesondere kann das Ladegut im gekoppelten Zustand auf dem Transportwagen oder im entkoppelten Zustand auf dem mindestens einen weiteren Fahrgestell zum Zielort transportiert werden.

Im gekoppelten Zustand des Basisfahrgestells und des mindestens einen weiteren Fahrgestells sind die mindestens zwei lenkstarren Rollen des Basisfahrgestells mit einem auf dem Untergrund wirkenden ursprünglichen Anpressdruck beaufschlagt. Der ursprüngliche Anpressdruck wird insbesondere durch ein Eigengewicht des Basisfahrgestells und des mindestens einen weiteren Fahrgestells erzeugt und durch ein Eigengewicht des in dem mindestens einen Kleinladungsträger angeordneten Ladeguts auf dem mindestens einen weiteren Fahrgestell erhöht.

Der Transportwagen umfasst einen Hub- und/oder Druckerzeuger mit mindestens einer Druck- und/oder Hubeinrichtung, insbesondere mit genau zwei Druck- und/oder Hubeinrichtungen. Vorzugsweise umfasst das Basisfahrgestell den Hub- und/oder Druckerzeuger mit der mindestens einen Druck- und/oder Hubeinrichtung. Insbesondere ist die mindestens eine Druck- und/oder Hubeinrichtung auf der mindestens einen Traverse, insbesondere auf deren Oberseite, angeordnet. Hierdurch ist das mindestens eine weitere Fahrgestell im gekoppelten Zustand zumindest abschnittsweise auf, über und/oder überlappend zur Druck- und/oder Hubeinrichtung angeordnet oder liegt auf der Druck- und/oder Hubeinrichtung auf. Dadurch wirkt die Druck- und/oder Hubeinrichtung auf das mit dem Basisfahrgestell gekoppelte mindestens eine weitere Fahrgestell. Hierbei erfolgt ein Hub des mindestens einen weiteren Fahrgestells von vorzugsweise mindestens 15 Millimetern, insbesondere von mindestens 25 Millimetern, im Speziellen von mindestens 35 Millimetern und/oder von vorzugsweise maximal 60 Millimetern, insbesondere von maximal 50 Millimetern.

Vorzugsweise ist die mindestens eine Druck- und/oder Hubeinrichtung als mindestens eine hydraulische Arbeitszylindereinrichtung mit mindestens einem Arbeitszylinder ausgebildet. Als hydraulische Arbeitszylindereinrichtung führt die mindestens eine Druck- und/oder Hubeinrichtung eine nach oben gerichtete Linearbewegung, insbesondere eine Druck- und/oder Hubbewegung gegen das mindestens eine weitere Fahrgestell aus, das mit dem Basisfahrgestell gekoppelt ist. Hierdurch wird das mindestens eine weitere Fahrgestell bevorzugt vom Basisfahrgestell, insbesondere von der mindestens einen Traverse, nach oben gedrückt und/oder angehoben, wodurch zumindest eine der mindestens drei Lenkrollen des mindestens einen weiteren Fahrgestells entlastet wird. Somit kann die zumindest eine entlastete Lenkrolle des mindestens einen weiteren Fahrgestells das Eigengewicht des Ladeguts nicht oder nicht vollständig auf dem Untergrund ablasten. Dies bewirkt eine Verteilung des Eigengewichts des Ladeguts auf insgesamt weniger Rollen des Transportwagens. Insbesondere werden die mindestens zwei lenkstarren Rollen des Basisfahrgestells mit einem höheren Anteil des Eigengewichts des Ladeguts belastet. Somit sind die mindestens zwei lenkstarren Rollen des Basisfahrgestells mit einem erhöhten auf den Untergrund wirkenden Anpressdruck beaufschlagt.

Es ist von Vorteil, dass der Transportwagen durch die Beaufschlagung der mindestens zwei lenkstarren Rollen des Basisfahrgestells mit dem erhöhten auf den Untergrund wirkenden Anpressdruck auch bei höheren Geschwindigkeiten, z.B. von mindestens 6 km/h, vorzugsweise von mindestens 8 km/h und/oder von maximal 15 km/h, vorzugsweise von maximal 12 km/h, spurtreu verfahren werden kann. Somit kann der mit dem Ladegut beladene mindestens eine Kleinladungsträger sicher und schnell zum Zielort verfahren werden, wodurch Kosten eingespart werden können. Insbesondere können durch die verbesserte Spurtreue Unfälle vermieden werden.

In einer bevorzugten Ausgestaltung der Erfindung ist der Druck- und/oder Huberzeuger als ein hydraulischer Druck- und/oder Huberzeuger ausgebildet. Vorzugsweise ist der Druck- und/oder Huberzeuger an oder auf dem Basisfahrgestell angeordnet. Insbesondere ist der Druck- und/oder Huberzeuger autark ausgebildet. Hierbei ist er zusammen mit dem Basisfahrgestell frei, insbesondere unabhängig von Leitungen und/oder Kabeln, verfahrbar. Der Druck- und/oder Huberzeuger ist insbesondere fremdenergiefrei und/oder manuell betätigbar.

In einer bevorzugten Umsetzung der Erfindung weist der Druck- und/oder Huberzeuger eine Pumpeneinrichtung zum Pumpen eines Fluids auf. Bevorzugt ist, dass die Pumpeneinrichtung mit der Druck- und/oder Hubeinrichtung in einer Wirkverbindung steht. Insbesondere wird die Druck- und/oder Hubeinrichtung durch die Pumpeneinrichtung betätigt und/oder ausgelöst, wodurch die Druck- und/oder Hubeinrichtung, insbesondere der mindestens eine Arbeitszylinder, die Linearbewegung, insbesondere den Druck und/oder Hub gegen das mindestens eine weitere Fahrgestell ausführt.

Bevorzugt ist weiterhin, dass der Druck- und/oder Huberzeuger mindestens eine Leitungseinrichtung zur Förderung eines Fluids aufweist. Insbesondere ist die Pumpeneinrichtung über die mindestens eine Leitungseinrichtung mit der Druck- und/oder Hubeinrichtung strömungstechnisch verbunden. Hier pumpt die Pumpeneinrichtung das Fluid durch die mindestens eine Leitungseinrichtung zur Druck- und/oder Hubeinrichtung. Das Fluid ist zum Beispiel als ein hydraulisches Fluid, im Speziellen als ein Hydrauliköl ausgebildet. Vorzugsweise umfasst der Druck- und/oder Huberzeuger einen Vorratsbehälter, in dem das Fluid bevorratet ist oder bevorratet werden kann. Insbesondere ist die Pumpeneinrichtung zum Pumpen des Fluids vom Vorratsbehälter durch die mindestens eine Leitungseinrichtung zur Druck- und/oder Hubeinrichtung ausgebildet.

Eine bevorzugte Ausgestaltung der Erfindung sieht vor, dass die Pumpeneinrichtung an einem stationären Abschnitt des Transportwagens, insbesondere am Außenrahmen des Basisfahrgestells, im Speziellen auf einer Oberseite des Außenrahmens, angeordnet ist. Insbesondere ist die Pumpeneinrichtung auf den Außenrahmen aufgesetzt und/oder daran befestigt. Vorzugsweise verläuft die mindestens eine Leitungseinrichtung entlang des Außenrahmens und/oder der mindestens einen Traverse. Insbesondere erstreckt sich die mindestens eine Leitungseinrichtung vom Vorratsbehälter bis zur der mindestens einen Druck- und/oder Hubeinrichtung, die bevorzugt auf der mindestens einen Traverse angeordnet ist.

Eine bevorzugte konstruktive Umsetzung der Erfindung sieht vor, dass der Außenrahmen einen Schwenkarm aufweist. Beispielsweise ist der Schwenkarm durch eine Längsseite des Außenrahmens gebildet. Insbesondere ist der Schwenkarm von einer Öffnungsstellung in eine Schließstellung überführbar. Optional weist der Schwenkarm einen Griff oder eine Grifföffnung auf, sodass er bevorzugt manuell von der Öffnungsstellung in die Schließstellung verschwenkt werden kann. Beispielsweise bildet der Schwenkarm einen relativ zum stationären Abschnitt verschwenkbaren Abschnitt des Transportwagens.

Vorzugsweise ist das mindestens eine weitere Fahrgestell in der Öffnungsstellung des Schwenkarms zur Kopplung in das Basisfahrgestell einfahrbar und zur Entkopplung aus diesem ausfahrbar. Insbesondere ist das mindestens eine weitere Fahrgestell in der Schließstellung des Schwenkarms mit dem Basisfahrgestell form- und/oder kraftschlüssig zum Transportwagen gekoppelt. Hierbei nehmen das Basisfahrgestell und das mindestens eine weitere Fahrgestell den gekoppelten Zustand ein.

Es ist besonders bevorzugt, dass die Pumpeneinrichtung in der Öffnungsstellung des Schwenkarms inaktiv ist. Vorzugsweise ist die Pumpeneinrichtung in der Schließstellung des Schwenkarms aktiviert. Beispielsweise ist der Schwenkarm mit der Pumpeneinrichtung mittelbar oder unmittelbar verbunden, wobei eine Schwenkbewegung des Schwenkarms auf die Pumpeneinrichtung wirkt. Insbesondere fungiert der Schwenkarm vorzugsweise als ein Hebelarm der Pumpeneinrichtung. Im Speziellen ist die Pumpeneinrichtung manuell betätigbar. Dies ist insbesondere deshalb der Fall, da die Pumpeneinrichtung über das manuelle Überführen des Schwenkarms von der Öffnungsstellung in die Schließstellung aktiviert wird. Somit pumpt die Pumpeneinrichtung bei der Überführung des Schwenkarms von der Öffnungsstellung zur Schließstellung und insbesondere in der Schließstellung des Schwenkarms das Fluid vom Vorratsbehälter über die mindestens eine Leitungseinrichtung zu der mindestens einen Druck- und/oder Hubeinrichtung. Hierdurch drängt das Fluid den mindestens einen Arbeitszylinder der Druck- und/oder Hubeinrichtung linear nach oben, wobei er vorzugsweise die Druck- und/oder Hubbewegung gegen das mindestens eine weitere Fahrgestell ausübt.

In einer bevorzugten konstruktiven Ausgestaltung der Erfindung umfasst das mindestens eine weitere Fahrgestell mindestens ein Wirkungsaufnahmebauteil. Vorzugsweise wirkt die mindestens eine Druck- und/oder Hubeinrichtung im gekoppelten Zustand auf das Wirkungsaufnahmebauteil. Insbesondere wirkt die lineare Druck- und/oder Hubbewegung des mindestens einen Arbeitszylinders nach oben gegen das Wirkungsaufnahmebauteil. Insbesondere wird die Druck- und/oder Hubbewegung der mindestens einen Druck- und/oder Hubeinrichtung auf das Wirkungsaufnahmebauteil aufgebracht.

Beispielsweise ist das Wirkungsaufnahmebauteil als ein Flächenbauteil, zum Beispiel als eine Platte, oder als ein Brett oder Blech ausgebildet. Insbesondere ist das Wirkungsaufnahmebauteil auf einer zum Untergrund gerichteten Unterseite des mindestens einen weiteren Fahrgestells angeordnet. Besonders bevorzugt ist, dass das am mindestens einen weiteren Fahrgestell angeordnete Wirkungsaufnahmebauteil im gekoppelten Zustand oberhalb der Druck- und/oder Hubeinrichtung angeordnet ist. Optional ergänzend kontaktiert das am mindestens einen weiteren Fahrgestell angeordnete Wirkungsaufnahmebauteil die Druck- und/oder Hubeinrichtung, insbesondere den mindestens einen Arbeitszylinder. Insbesondere liegt das mindestens eine weitere Fahrgestell im gekoppelten Zustand mit dem Wirkungsaufnahmebauteil auf der mindestens einen Druck- und/oder Hubeinrichtung auf. Somit kann die mindestens eine Druck- und/oder Hubeinrichtung direkt und unmittelbar auf das Wirkungsaufnahmebauteil wirken, insbesondere die lineare Bewegung nach oben gegen das Wirkungsaufnahmebauteil ausführen. Im Speziellen richtet die Druck- und/oder Hubeinrichtung die Hub- und/oder Druckbewegung gegen das Wirkungsaufnahmebauteil.

Durch die Druck- und/oder Hubbewegung gegen das Wirkungsaufnahmebauteil wird die zumindest eine der mindestens drei Lenkrollen des mindestens einen weiteren Fahrgestells entlastet und/oder gegenüber dem Untergrund angehoben. Dadurch kann in vorteilhafter Weise erreicht werden, dass das Eigengewicht des Ladeguts in den Kleinladungsträgern insgesamt auf weniger Rollen des Transportwagens, insbesondere auf die mindestens zwei lenkstarren Rollen des Basisfahrgestells, verteilt wird. Im Speziellen wird durch die Verteilung des Eigengewichts des Ladeguts insbesondere auf die lenkstarren Rollen der höhere Anpressdruck auf den Untergrund erzeugt und dadurch die Spurtreue des Transportwagens auch bei erhöhter Geschwindigkeit gewährleistet. Insbesondere ist der Transportwagen dazu ausgebildet, das Ladegut mit einer Geschwindigkeit von vorzugsweise mindestens 6 km/h, insbesondere von mindestens 8 km/h und/oder von maximal 15 km/h, vorzugsweise von maximal 12 km/h spurtreu zu transportieren.

In einer bevorzugten Umsetzung der Erfindung liegt der Schwenkarm in der Schließstellung auf dem Wirkungsaufnahmebauteil auf und drückt dieses in Richtung der mindestens einen Druck- und/oder Hubeinrichtung, insbesondere auf den mindestens einen Arbeitszylinder. Dadurch ist das mindestens eine weitere Fahrgestell im gekoppelten Zustand gegen ein vollständiges Abheben durch die Druck- und/oder Hubbewegung vom Basisfahrgestell gesichert. Insbesondere wird sichergestellt, dass der Transportwagen durch den Kontakt zumindest einer der mindestens drei Lenkrollen des weiteren Fahrgestells auf dem Untergrund lenkbar und/oder manövrierfähig bleibt.

Weitere Merkmale, Vorteile und Wirkungen der Erfindung ergeben sich aus der nachfolgenden Beschreibung bevorzugter Ausführungsbeispiele der Erfindung. Dabei zeigen:
- Figur 1: eine perspektivische Ansicht eines Transportwagens mit einem Basisfahrgestell und mit einem weiteren Fahrgestell;
- Figur 2a: das Basisfahrgestell des Transportwagens aus Fig. 1 mit geschlossenem Schwenkarm;
- Figur 2b: das Basisfahrgestell aus Fig. 1 mit geöffnetem Schwenkarm;
- Figur 3: das weitere Fahrgestell des Transportwagens aus Fig. 1;
- Figur 4: ein alternativer Transportwagen mit einem ersten weiteren Fahrgestell und mit einem zweiten weiteren Fahrgestell.

Einander entsprechende oder gleiche Teile sind in den Figuren jeweils mit den gleichen Bezugszeichen versehen.

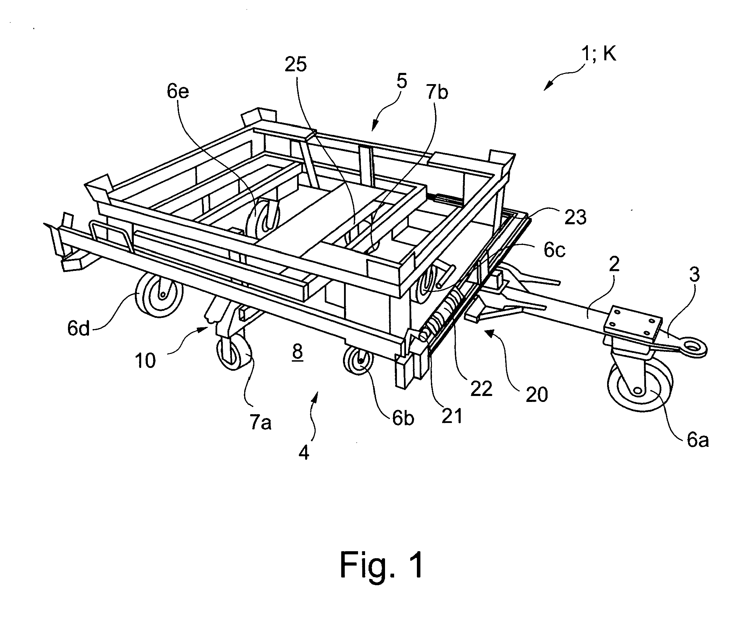

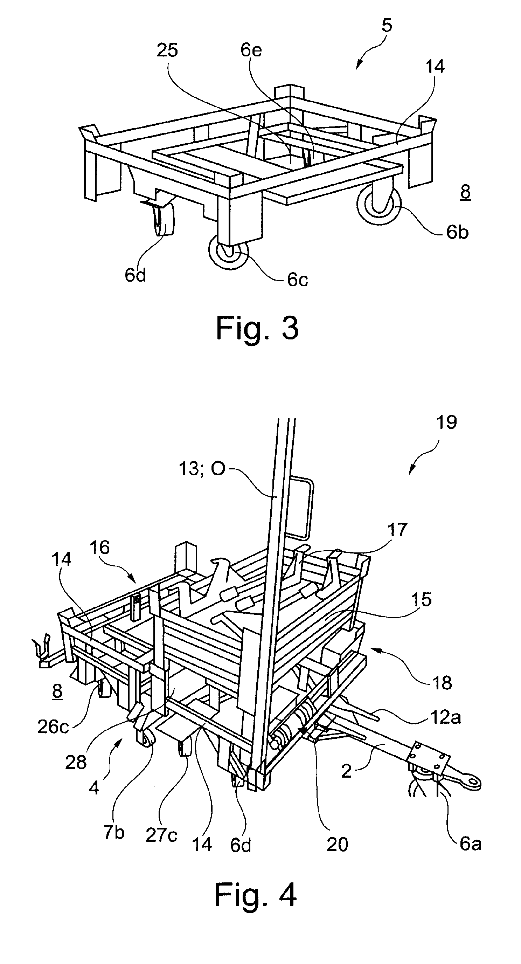

Figur 1 zeigt einen Transportwagen 1 in perspektivischer Ansicht. Der Transportwagen 1 ist zum Transport von Ladegut 17 (Fig. 4) im Zugbetrieb, insbesondere durch eine Zugmaschine, ausgebildet. Der Transportwagen 1 weist eine Deichsel 2 und eine Anhängekupplung 3 auf, durch die er an der Zugmaschine ankoppelbar ist.

Der Transportwagen 1 umfasst ein Basisfahrgestell 4 und ein weiteres Fahrgestell 5. Das Basisfahrgestell 4 und das weitere Fahrgestell 5 sind bevorzugt fest und/oder starr miteinander gekoppelt. Hierbei weisen sie einen gekoppelten Zustand K auf. Im gekoppelten Zustand K sind das Basisfahrgestell 4 und das weitere Fahrgestell 5 bewegungssynchron miteinander auf einem Untergrund 8 verfahrbar. Zum Verfahren umfasst der Transportwagen 1 insgesamt sieben Rollen 6a; 6b; 6c; 6d; 6e; 7a; 7b, wovon zwei als lenkstarre Rollen 7a; 7b und fünf als Lenkrollen 6a; 6b; 6c; 6d; 6e ausgebildet sind.

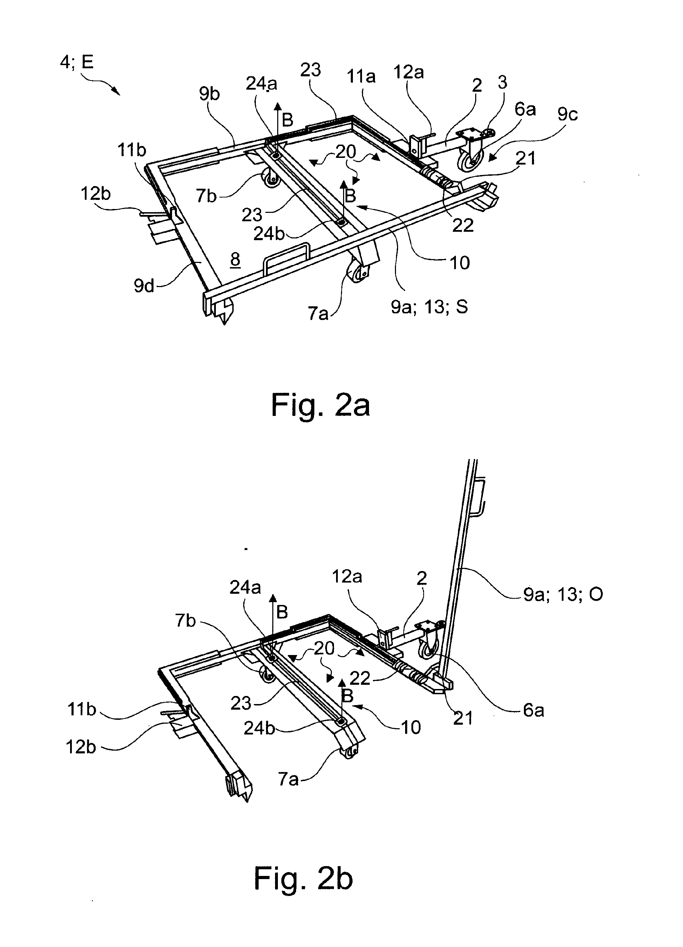

In Figur 2a ist das Basisfahrgestell 4 aus Figur 1 dargestellt. Das Basisfahrgestell 4 weist einen rechteckigen Außenrahmen 9 mit einer ersten und zweiten Aufnahme 11 a; 11 b für die Deichsel 2 auf. Diese ist in jeder der Aufnahmen 11 a; 11 b einsteckbar. Die erste Aufnahme 11a ist an einer ersten Querseite 9c des Außenrahmens 9 und die zweite Aufnahme 11 b auf einer zweiten gegenüberliegenden Querseite 9d des Außenrahmens 9 angeordnet. Jeder Aufnahme 11 a; 11 b ist ein Schnellspanner 12a; 12b zugeordnet. Durch die Schnellspanner 12a; 12b kann die Deichsel 2 mit wenigen Handgriffen zwischen den beiden Aufnahmen 11 a; 11 b umgesetzt werden. Durch die Möglichkeit, die Deichsel 2 flexibel an einer der beiden Querseiten 9c; 9d zu befestigen, wird es ermöglicht, den Transportwagen 1 links- oder rechtsseitig z.B. an eine Produktionslinie anzufahren.

Der Außenrahmen 9 weist einen Schwenkarm 13 auf, der durch die Längsseite 9a gebildet ist. Der Schwenkarm 13 ist von einer Schließstellung S gemäß Fig. 2a in eine Öffnungsstellung O gemäß Fig. 2b überführbar und zur Kopplung des Basisfahrgestells 4 mit dem weiteren Fahrgestell 5 ausgebildet. Der Schwenkarm 13 weist einen Griff zum manuellen Verschwenken auf. Bei geöffnetem Schwenkarm 13 (Fig. 2b) ist das weitere Fahrgestell 5 in das Basisfahrgestell 4 einfahrbar oder aus diesem ausfahrbar. Bei geschlossenen Schwenkarm 13 (Fig. 2a) ist das weitere Fahrgestell 5 form- und/oder kraftschlüssig mit dem Basisfahrgestell 4 zum Transportwagen 1 gemäß Fig. 1 gekoppelt.

Der Außenrahmen 9 des weist eine Traverse 10 auf, die sich zwischen zwei Längsseiten 9a; 9b des Außenrahmens 9 erstreckt und diesen mittig in zwei gleichgroße Rechtecke unterteilt. Das Basisfahrgestell 4 umfasst die zwei lenkstarre Rollen 7a; 7b, die an der Traverse 10 angeordnet sind. Das Basisfahrgestell umfasst die erste Lenkrolle 6a, die an der Deichsel 2 angeordnet ist. Somit ist das erste Fahrgestell 4 als ein Dreirad mit der ersten Lenkrolle 6a und den zwei lenkstarren Rollen 7a; 7b ausgebildet.

Mit den beiden lenkstarren Rollen 7a; 7b und mit der ersten Lenkrolle 6a steht das Basisfahrgestell 4 auf dem Untergrund 8 auf und ist separat vom weiteren Fahrgestell 5 verfahrbar. Die erste Lenkrolle 6a ist an der Deichsel 2 angeordnet, die beiden lenkstarren Rollen 7a, 7b sind an der Traverse 10 angeordnet. Im gekoppelten Zustand mit dem weiteren Fahrgestell 5 gemäß Fig. 1 sind die beiden lenkstarren Rollen 7a; 7b mit einem auf den Untergrund 8 wirkenden Anpressdruck beaufschlagt. Dieser wird insbesondere durch ein Eigengewicht des Basisfahrgestells 4, des weiteren Fahrgestells 5 und durch das Eigengewicht des Ladeguts 17 erzeugt, das auf dem weiteren Fahrgestell 5 in mindestens einem Kleinladungsträger 15 transportiert wird (siehe hierzu Fig. 4).

Der Transportwagen 1 umfasst einen Druck- und/oder Huberzeuger 20, der am Basisfahrgestell 4 angeordnet ist. Der Druck- und/oder Huberzeuger 20 wirkt im gekoppelten Zustand K auf das mindestens eine weitere Fahrgestell 5. Dadurch sind die beiden lenkstarren Rollen 7a; 7b mit deinem erhöhten auf den Untergrund 8 wirkenden Anpressdruck beaufschlagt. Der Druck- und/oder Huberzeuger 20 ist autark ausgebildet. Insbesondere ist er unabhängig von Leitungen und/oder Kabeln zusammen mit dem Basisfahrgestell 4 verfahrbar. Der Druck- und/oder Huberzeuger 20 ist als ein hydraulischer Huberzeuger 20 ausgebildet.

Der hydraulische Huberzeuger 20 umfasst eine Pumpeneinrichtung 21, einen Vorratsbehälter 22, mindestens eine Leitungseinrichtung 23 und z.B. zwei Druck- und/oder Hubeinrichtungen 24a; 24b, die als z.B. zwei hydraulische Arbeitszylindereinrichtungen mit zwei Arbeitszylindern ausgebildet sind. Die beiden Druck- und/oder Hubeinrichtungen 24a; 24b sind im gekoppelten Zustand K auf einer zum weiteren Fahrgestell 5 gerichteten Oberseite der Traverse 10 angeordnet. Sie sind dazu ausgebildet, eine linear nach oben gerichtete Hub- und/oder Druckbewegung B auszuführen. Die Pumpeneinrichtung 21 und der Vorratsbehälter 22 sind am Außenrahmen 9, insbesondere an der ersten Querseite 9c angeordnet. Die mindestens eine Leitungseinrichtung 23 verläuft auf der Oberseite des Außenrahmens 9 vom Vorratsbehälter zu den beiden Druck- und/oder Hubeinrichtungen 24a; 24. Dadurch sind der Vorratsbehälter 22 und die Druck- und/oder Hubeinrichtungen 24a; 24b strömungstechnisch miteinander verbunden.

In dem Vorratsbehälter 22 ist ein Fluid, z.B. ein Hydrauliköl, bevorratet und/oder bervorratbar. Dieses ist z.B. manuell in den Vorratsbehälter 22 einfüllbar. Die Pumpeneinrichtung 21 ist mit dem Schwenkarm 13 wirkverbunden. Wenn der Schwenkarm 13 die Öffnungsstellung O einnimmt, ist die Pumpeneinrichtung 21 deaktiviert. Bei der Überführung von der Öffnungsstellung O in die Schließstellung S und/oder in der Schließstellung S ist die Pumpeneinrichtung 21 aktiviert. Hierbei fungiert der Schwenkarm 13 als ein Hebelarm für die Pumpeneinrichtung 21.

Im aktivierten Zustand pumpt die Pumpeneinrichtung 21 das Fluid vom Vorratsbehälter 22 über die mindestens eine Leitungseinrichtung 23 zu den beiden Druck- und/oder Hubeinrichtungen 24a; 24b. Dadurch werden die beiden Arbeitszylinder der Druck- und/oder Hubeinrichtungen 24a; 24b linear nach oben bewegt, wobei sie im gekoppelten Zustand K (Fig. 1) die gegen das weitere Fahrgestell 5 gerichtete Hub- und/oder Druckbewegung B ausführen.

Figur 3 zeigt das weitere Fahrgestell 5 aus Fig. 1 in perspektivischer Ansicht. Das weitere Fahrgestell 5 weist eine rechteckige Aufnahmeeinrichtung 14 auf, die zur Aufnahme des mindestens einen mit dem Ladegut 17 bestückbaren oder bestückten Kleinladungsträgers 15 (Fig. 4) ausgebildet ist. Die restlichen vier Lenkrollen 6b; 6c; 6d; 6e der insgesamt fünf Lenkrollen 6a; 6b; 6c; 6d; 6e des Transportwagens 1 (Fig. 1) sind am weiteren Fahrgestell 5, insbesondere an der Aufnahmeeinrichtung 14, angeordnet und stehen auf dem Untergrund 8 auf. Das weitere Fahrgestell 5 ist separat zum Basisfahrgestell 4 auf dem Untergrund verfahrbar. Das weitere Fahrgestell 5, insbesondere die Aufnahmeeinrichtung 14, ist an eine Größe des Außenrahmens 9 des ersten Fahrgestells (Fig. 2a, 2b) angepasst oder gleicht dieser. Somit ist das zweite Fahrgestell 5 in das erste Fahrgestell 4 einfahrbar und mit diesem in der Größe weitestgehend übereinstimmend koppelbar.

Das weitere Fahrgestell 5 weist ein Wirkungsaufnahmebauteil 25 auf, auf das die Druck- und/oder Hubeinrichtungen 24a; 24b wirken, wenn das Basisfahrgestell 4 und das weitere Fahrgestell 5 miteinander gekoppelt sind und die Pumpeneinrichtung 21 aktiviert ist. Das Wirkungsaufnahmebauteil 25 ist als ein Flächenbauteil, insbesondere als ein Brett oder eine Platte ausgebildet. Es ist mittig auf einer Unterseite der Aufnahmeeinrichtung 14 angeordnet und verbindet zwei Längsseiten der Aufnahmeeinrichtung 14 miteinander. Im gekoppelten Zustand K ist das Wirkungsaufnahmebauteil 25 gemäß Fig. 1 oberhalb der Traverse 13 und/oder überlappend mit der Traverse 13 angeordnet. Insbesondere ist das weitere Fahrgestell 5 mit dem Wirkungsaufnahmebauteil 25 oberhalb der beiden Druck- und/oder Hubeinrichtungen 24a; 24b angeordnet und/oder liegt auf diesen auf, sodass die Arbeitszylinder die lineare Druck- und/oder Hubbewegung B gegen das Wirkungsaufnahmebauteil 25 ausführen können.

Durch die Druck- und/oder Hubbewegung B wird zumindest eine der am weiteren Fahrgestell 5 angeordneten Lenkrollen 6b; 6c; 6d; 6e entlastet und/oder vom Untergrund 8 angehoben. Dadurch wird erreicht, dass sich das Eigengewicht des Ladeguts 17 auf insgesamt weniger Rollen und insbesondere auf die beiden lenkstarren Rollen 7a; 7b des Basisfahrgestells 4 verteilt. Dadurch sind diese mit dem auf den Untergrund 8 gerichteten und erhöhten Anpressdruck beaufschlagt. Dadurch wird gewährleistet, dass das Fahrgestell 1 auch bei höheren Geschwindigkeiten von z.B. mindestens 6 km/h, vorzugsweise von mindestens 8 km/h und/oder von maximal 15 km/h, vorzugsweise von maximal 12 km/h, spurtreu verfahrbar ist und das Ladegut 17 sicher zum Zielort transportiert.

Der Schwenkarm 13 liegt in der Schließstellung S auf dem Wirkungsaufnahmebauteil 25 auf und drückt dieses gegen die Traverse und gegen die Druck- und/oder Hubeinrichtungen 24a; 24b. Dadurch wird erreicht, dass das weitere Fahrgestell 5 durch die Druck- und/oder Hubbewegung B der Arbeitszylinder nicht vollständig vom Basisfahrgestell abhebt oder von diesem wegkippt. Optional ergänzend wird dadurch gewährleistet, dass zumindest eine der Lenkrollen 6b; 6c; 6d; 6e des weiteren Fahrgestells 5 auf dem Untergrund 8 aufsetzen und der Transportwagen 1 sicher und einfach dadurch lenkbar verfahren werden kann.

In einem weiteren Ausführungsbeispiel der Erfindung, das in Figur 4 gezeigt ist, ist ein alternativer Transportwagen 19 mit dem Schwenkarm 13 in der Öffnungsstellung O gezeigt. Der alternative Transportwagen 19 durch Schließen des Schwenkarms 13 gebildet, wobei dadurch das Basisfahrgestell 4, ein erstes weiteres Fahrgestell 16 und ein zweites weiteres Fahrgestell 18 gebildet miteinander gekoppelt sind.

Das erste und zweite weitere Fahrgestell 16; 18 sind baugleich oder bauähnlich ausgebildet. Die Größe des ersten und zweiten weiteren Fahrgestells 16; 18, insbesondere deren Aufnahmeeinrichtung 14, ist an eine Hälfte der Größe des Basisfahrgestells 4 angepasst oder gleicht dieser. Somit sind das erste weitere Fahrgestell 16 und das zweite weitere Fahrgestell 18 in das Basisfahrgestell 4 einfahrbar, nebeneinander anordbar, mit dem Basisfahrgestell 4 zu dem alternativen Transportwagen 19 koppelbar und gemeinsam als dieser verfahrbar.

Die Figuren 1 und 4 zeigen, dass das Basisfahrgestell 4 dazu ausgebildet ist, nur das weitere Fahrgestell 5 mit einer an die Größe des ersten Fahrgestells 4 angepassten oder entsprechenden Aufnahmeeinrichtung 14 aufzunehmen. Zugleich ist das Basisfahrgestell 4 dazu ausgebildet, das erste weitere Fahrgestell 16 und das zweite weitere Fahrgestell 18 aufzunehmen, wenn deren Aufnahmeeinrichtungen 14 an die Hälfte der Größe des ersten Fahrgestells 4 angepasst sind oder diesem gleichen. Somit ist das Basisfahrgestell 4 flexibel, insbesondere nach einem Baukastenverfahren, für ein oder mehrere weitere Fahrgestelle 4; 16; 18 einsetzbar.

Der alternative Transportwagen 19 gemäß Fig. 4 weist insgesamt elf Rollen 6a; 26a, 26b; 26c; 26d; 27a; 27b; 27c; 27d; 7a; 7b auf, mit denen er auf dem Untergrund 8 verfahrbar ist. Drei davon, insbesondere die beiden lenkstarren Rollen 7a; 7b und die erste Lenkrolle 6a, sind am Basisfahrgestell 4 angeordnet. Vier Lenkrollen 26a, 26b; 26c; 26d sind am ersten weiteren Fahrgestell 16 angeordnet. Das zweite weitere Fahrgestell 18 weist ebenfalls vier Lenkrollen 27a; 27b; 27c; 27d auf.

Das erste und/oder zweite weitere Fahrgestell 16; 18 weist ein weiteres Wirkungsaufnahmebauteil 28 auf. Dieses ist bodenseitig an einer Quer- oder Längsseite des ersten und/oder zweiten weiteren Fahrgestells 16; 18 angeordnet, sodass es im gekoppelten Zustand K mit dem Basisfahrgestell 4 oberhalb und/oder überlappend mit der Traverse 10 angeordnet ist und sodass die Arbeitszylinder der Druck- und/oder Hubeinrichtungen 24a; 24b auf das weitere Wirkungsaufnahmebauteil 28 wirken können. Dadurch werden das erste und/oder zweite weitere Fahrgestell 16; 18 mit zumindest einer der Lenkrollen 26a, 26b; 26c; 26d; 27a; 27b; 27c; 27d vom Untergrund angehoben und die lenkstarren Rollen 7a; 7b des Basisfahrgestells 4 mit dem erhöhten Anpressdruck auf dem Untergrund 8 beaufschlagt.

Während vorstehend mindestens ein Ausführungsbeispiel detailliert offenbart wurde, ist es anzuerkennen, dass eine Vielzahl von erfindungsgemäßen Variationen existieren. Es ist ebenfalls anzuerkennen, dass das mindestens eine Ausführungsbeispiel nur beispielhaften Charakter hat und keine Begrenzung des Schutzumfangs, der Anwendungsgebiete oder der Konfiguration darstellt. Vielmehr soll die vorliegende Offenbarung einen angenehmen Fahrplan zur Umsetzung mindestens eines Ausführungsbeispiels sein. Somit sollte es anzuerkennen sein, dass verschiedene Variationen der Funktion oder der Anordnung der Elemente des mindestens einen Ausführungsbeispiels umgesetzt werden können, ohne den Umfang zu verlassen, der durch die Ansprüche und deren rechtmäßigen Äquivalente vorgegeben ist.

### Bezugszeichenliste:

- 1: Transportwagen
- 2: Deichsel
- 3: Anhängekupplung
- 4: Basisfahrgestell
- 5: weiteres Fahrgestell
- 6a: Lenkrolle des Basisfahrgestells
- 6b-e: Lenkrollen des weiteren Fahrgestells
- 7a-b: lenkstarren Rollen
- 8: Untergrund
- 9: Außenrahmen
- 9a; 9b: Längsseiten des Außenrahmens
- 9c; 9d: Querseiten des Außenrahmens
- 10: Traverse
- 11a-b: Aufnahmen für Deichsel
- 12a-b: Schnellspanner
- 13: Schwenkarm
- 14: Aufnahmeeinrichtung
- 15: Kleinladungsträger
- 16: erstes weiteres Fahrgestell
- 17: Ladegut
- 18: zweites weiteres Fahrgestell
- 19: alternativer Transportwagen
- 20: Druck- und/oder Huberzeuger
- 21: Pumpeneinrichtung
- 22: Vorratsbehälter
- 23: Leitungseinrichtung
- 24a-b: Druck- und/oder Hubeinrichtungen
- 25: Wirkungsaufnahmebauteil
- 26a-d: weitere Lenkrollen des ersten weiteren Fahrgestells
- 27a-d: weitere Lenkrollen des zweiten weiteren Fahrgestells
- 28: weiteres Wirkungsaufnahmebauteil
- B: Druck- und/oder Hubbewegung
- K: gekoppelter Zustand
- O: Öffnungsstellung
- S: Schließstellung

## Patentansprüche

1. Transportwagen (1; 19) zum Transport von Ladegut (17) im Zugbetrieb,
mit einem Basisfahrgestell (4) und mit mindestens einem weiteren Fahrgestell (4; 16; 18), wobei das Basisfahrgestell (4) und das mindestens eine weitere Fahrgestell (4; 16; 18) miteinander in einen gekoppelten Zustand (K) koppelbar sind,
wobei das Basisfahrgestell (4) mindestens zwei lenkstarre Rollen (7a; 7b) zum Verfahren des Basisfahrgestell (4) auf einem Untergrund (8) umfasst, wobei die mindestens zwei lenkstarren Rollen (7a; 7b) im gekoppelten Zustand (K) mit einem auf den Untergrund (8) wirkenden ursprünglichen Anpressdruck beaufschlagt sind,
wobei der Transportwagen (1; 19) einen Druck- und/oder Huberzeuger (20) umfasst, wobei der Druck- und/oder Huberzeuger (20) im gekoppelten Zustand auf das mindestens eine weitere Fahrgestell (5; 16; 18) wirkt, sodass die mindestens zwei lenkstarren Rollen (7a; 7b) mit einem erhöhten auf den Untergrund (8) wirkenden Anpressdruck beaufschlagt sind.

2. Transportwagen (1; 19) nach Anspruch 1, wobei der Druck- und/oder Huberzeuger (20) autark ausgebildet ist und/oder frei mit dem Transportwagen (1; 19) verfahrbar ist.

3. Transportwagen (1; 19) nach Anspruch 1 oder 2, wobei der Druck- und/oder Huberzeuger (1; 19) als ein hydraulischer Druck- und/oder Huberzeuger ausgebildet ist.

4. Transportwagen (1; 19) nach einem der vorhergehenden Ansprüche, wobei der Druck- und/oder Huberzeuger (1; 19) eine Pumpeneinrichtung (21) und mindestens eine Druck- und/oder Hubeinrichtung (24a; 24b) umfasst, wobei die Pumpeneinrichtung (21) zum Pumpen eines Fluids zu der mindestens einen Druck- und/oder Hubeinrichtung (24a; 24b) ausgebildet ist.

5. Transportwagen (1; 19) nach Anspruch 4, wobei die mindestens eine Druck- und/oder Hubeinrichtung (24a; 24b) als mindestens eine hydraulische Arbeitszylindereinrichtung ausgebildet ist, wobei die mindestens eine hydraulische Arbeitszylindereinrichtung mindestens einen Arbeitszylinder zur Durchführung einer linearen Hub- und/oder Druckbewegung (B) auf das mindestens eine weitere Fahrgestell (5; 16; 18) aufweist.

6. Transportwagen (1; 19) nach Anspruch 4 oder 5, wobei das Basisfahrgestell (4) einen Außenrahmen (9) und mindestens eine Traverse (10) umfasst, wobei die mindestens eine Druck- und/oder Hubeinrichtung (24a; 24b) an der mindestens einen Traverse (10) angeordnet ist.

7. Transportwagen (1; 19) nach Anspruch 6, wobei der Außenrahmen (9) einen Schwenkarm (13) aufweist, der von einer Öffnungsstellung (O) in eine Schließstellung (S) überführbar ist, wobei das mindestens eine weitere Fahrgestell (5; 16; 18) in der Öffnungsstellung (O) des Schwenkarms (13) in das Basisfahrgestell (4) einfahrbar oder aus diesem ausfahrbar ist und in der Schließstellung (S) des Schwenkarms (13) mit dem Basisfahrgestell (4) gekoppelt ist.

8. Transportwagen (1; 19) nach Anspruch 7, wobei die Pumpeneinrichtung (21) in der Öffnungsstellung (O) des Schwenkarms (13) inaktiv ist und in der Schließstellung (S) des Schwenkarms (13) aktiviert ist.

9. Transportwagen (1; 19) nach Anspruch 7 oder 8, wobei der Schwenkarm (13) mit der Pumpeneinrichtung (21) verbunden ist und als ein Hebelarm der Pumpeneinrichtung (21) fungiert.

10. Transportwagen (1; 19) nach einem der vorhergehenden Ansprüche, wobei das mindestens eine weitere Fahrgestell (5; 16; 18) mindestens drei Lenkrollen (6b; 6c; 6d; 6e; 26a; 26b; 26c; 26d; 27a; 27b; 27c; 27d) zum lenkbaren Verfahren auf dem Untergrund (8) umfasst.

11. Transportwagen (1; 19) nach einem der Ansprüche 4 bis 10, wobei das mindestens eine weitere Fahrgestell (5; 16; 18) mindestens ein Wirkungsaufnahmebauteil (25; 28) umfasst, auf das die mindestens eine Druck- und/oder Hubeinrichtung (24a; 24b) im gekoppelten Zustand (K) wirkt.

12. Transportwagen (1; 19) nach Anspruch 11, wobei zumindest eine der mindestens drei Lenkrollen (6b; 6c; 6d; 6e; 26a; 26b; 26c; 26d; 27a; 27b; 27c; 27d) des mindestens einen weiteren Fahrgestells (5; 16; 18) aufgrund der Wirkung der mindestens einen Hub- und/oder Druckeinrichtung (24a; 24b) gegen das mindestens eine Wirkungsaufnahmenbauteil (25; 28) entlastet und/oder vom Untergrund (8) angehoben ist.

13. Transportwagen (1; 19) nach Anspruch 11 oder 12, wobei das mindestens eine Wirkungsaufnahmebauteil (25; 28) als ein Flächenbauteil ausgebildet ist.

14. Transportwagen (1; 19) nach einem der Ansprüche 10 bis 12, wobei der Schwenkarm (13) in der Schließstellung (S) auf dem mindestens einen Wirkungsaufnahmebauteil (25; 28) aufliegt und/oder dieses in Richtung der mindestens einen Druck- und/oder Hubeinrichtung (24a; 24b) drückt.

15. Transportwagen (1; 19) nach einem der vorhergehenden Ansprüche, wobei der Transportwagen (1; 19) dazu ausgebildet ist, Ladegut (17) mit einer Geschwindigkeit von mindestens 6 km/h, vorzugsweise von mindestens 8 km/h und/oder von maximal 15 km/h, vorzugsweise von maximal 12 km/h spurtreu zu transportieren.
